# EUROPEAN PATENT APPLICATION

(11) **EP 1 461 996 A1**
(43) Date of publication of application: **29.09.2004**
(21) Application number: 04006892.6
(22) Date of filing: 23.03.2004
(51) Int. Cl.: A01K 1/015, A01K 15/02

(54) **Carpet for training horses**

(30) Priority: 25.03.2003 SE 0300802
(71) Applicant: Lundberg, Lennart, 374 40 Karlshamn (SE)
(72) Inventor: Lundberg, Lennart, SE-374 40 Karlshamn (SE); Svensson, Ove, SE-374 40 Karlshamn (SE)
(74) Representative: Hopfgarten, Nils

(57) **Abstract**

The present invention relates to a carpet for training horses. The strength, balance and coordination of the horse are efficiently trained. The design of the carpet result in that the hoof, when the horse steps on the carpet, does not meet any firm support in any direction and does not either reach firm ground. The horse therefore has to correct the position of the hoof in the carpet when walking. The carpet is provided with a lower part (3) of the carpet designed to train the horse to step inclined, i.e. to vary the stress of the hoof soft in different directions.

## Description

### Technical field

The present invention relates to a carpet for training horses.

### Field of invention

Today, holding horses often means that the horse does not have access to its natural environment with various grounds and hilly land. In freedom, a horse is moving more or less continuously during most part of the day and night, whilst a tame horse is standing still in the stable during a number of hours. The tame horse is furthermore substantially moving on plane surfaces, which are more or less hard.

Thereby, the horse is loosing the natural stimulation required to achieve good strength, balance and coordination. For example, this causes injuries due to stress to arise more often, and also result in an increased frequency of injuries and reduced performance which in turn means increasing suffering for the horse and large costs for the horse owner for veterinary care, medicals, convalescence etc.

The present invention intends to provide a carpet for training horses that solves the above-mentioned problems.

### Description of the invention

The present invention intends to provide a carpet for training horses, with which the strength, balance and coordination of the horse is efficiently trained. By use of the carpet for training horses the needs of the horse for training, which are not naturally present in the environment of tame horse, are provided for. By walking the horse back and fourth on the carpet exercise on the carpet for training horses is performed.

The design of the carpet result in that the hoof does not meet any firm support when the horse steps on the carpet, and does not either reach the firm ground. Therefore, the horse has to correct the position of the hoof all the time when stepping on the carpet.

To make the training more efficient, the carpet can be provided with a specially designed lower part that is designed to train the horse to step inclined, i.e. to vary the stress of the hoof soft in different directions. By using a number of different parts in recesses in the lower part of the carpet, possibility to vary the stress of the hoof is achieved.

Small movements will gradually be improved with continuous exercise of this kind, due to the substantial increase of the signals between brain and muscles, which in turn result in improved cooperation between the muscles resulting in increased strength at the same time as increased fastness, condition, balance and coordination, whereby low frequency of injuries is optimised.

Before competition, training on the Legmaster carpet for training horses can make the horse reach a level of performance that cannot be reached without exactly this training.

The carpet for training horses comprises an upper and a lower part, where the upper part is designed in a firm material and the lower part is designed in a soft material. This construction result in that the hoof, when the horse steps on the carpet, does not reach any firm support in any direction, instead the horse continuously have to correct the movement of the hoof.

The upper part is, in a preferred embodiment, designed as a carpet of rubber material. The lower, soft part can be designed in plastic foam.

The plastic foam can be designed as a number of blocks of plastic foam, which can be connected to each other. Rubber is a durable material that endures wear as well as exposure to weather and wind. The soft but still stable consistency of the plastic foam result in the yield strived for to achieve the desired effect. By connecting a number of blocks of plastic foam, a flexible construction that can be adapted to the desires for the final design of the construction is achieved. By choosing the number of blocks of the plastic foam and blocks with different design, the final carpet can be designed in optional length or, if so wished, round, which is convenient in horse walkers.

The lower part comprises, in a preferred embodiment, recesses in which parts of hard material are arranged. The lower part can comprise a number of those recesses, whereby parts of hard material are arranged in respective recess. The parts can be designed in a material of different hardness. Thereby, a carpet with a ground with further variations is achieved, which further more require the horse to continuously coordinate its movements, whereby an increased effect of the training is reached. The parts can also comprise parties with various thicknesses to further vary the ground.

In a preferred embodiment, the recesses are arranged substantially perpendicular to the direction in which a horse is walking on the carpet.

### Brief description of the drawings

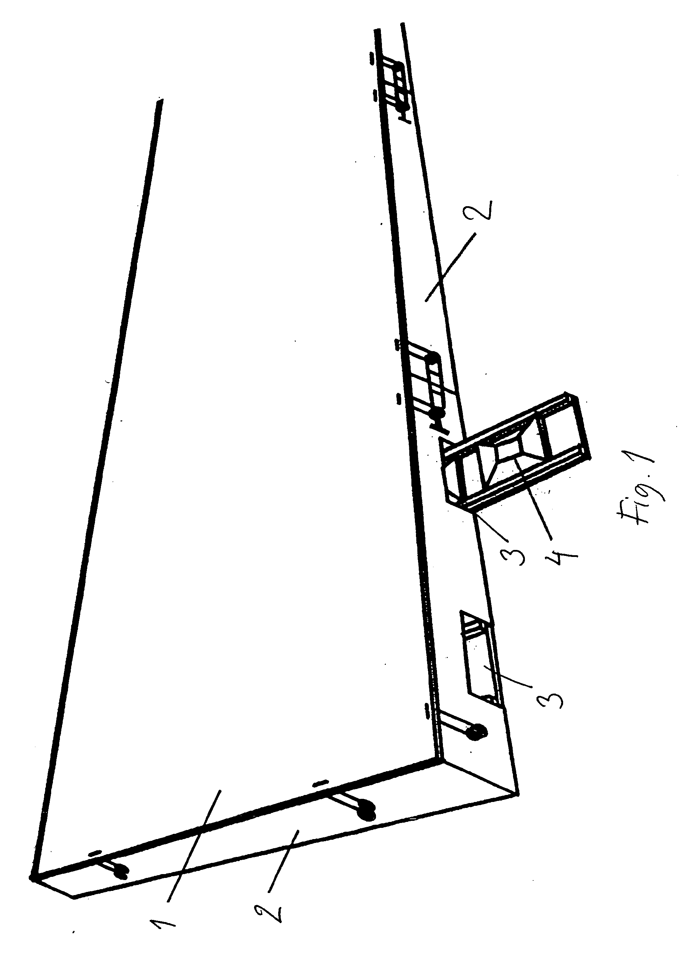

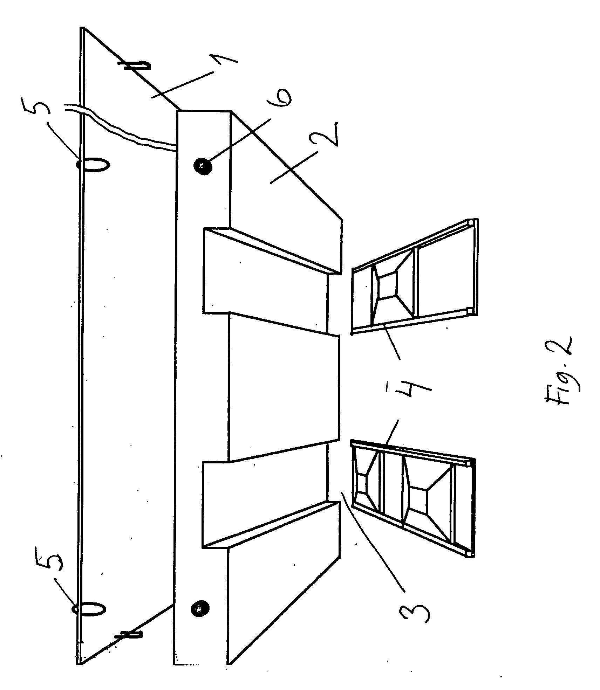

Fig. 1 shows a carpet for training horses according to the present invention.

### Detailed description of preferred embodiments

The present invention will now be described in detail together with the accompanying drawings.

Fig. 1 shows the carpet for training horses with an upper part 1 consisting of a carpet of high quality rubber which is much harder than the lower part 2 consisting of blocks of plastic foam. The lower carpet is provided with recesses 3, which is milled in the plastic foam, in which recesses parts 4 designed in different material, with different hardness, are arranged. The lower part 2 consists variously of blocks of plastic foam with or without milled recesses 3. A number of blocks of plastic foam, depending on the desired length of the carpet, are connected to each other along the widest side in an optional way, for example with rubber straps and holds screwed in fastening sticks. The upper carpet of rubber is thereafter placed on top and fastened, for example with rubber rings 5 arranged around a rubber strop hold arranged in the lower carpet.

The invention is not limited to the embodiments mentioned above, as examples, but can be performed as modifications within the scope of the invention described in the following claims.

## Claims

1. Carpet for training horses, comprising an upper part (1) and a lower part (2),
**characterised in**
**that** the upper part (1) is designed in a firm material, and that the lower part (2) is designed in a soft material.

2. Carpet for training horses according to claim 1,
**characterised in**
**that** the upper part (1) comprises a carpet of rubber material.

3. Carpet for training horses according to any of the preceding claims,
**characterised in**
**that** the lower part (2) is designed of plastic foam.

4. Carpet for training horses according to the preceding claim,
**characterised in**
**that** the lower part (2) comprises a number of blocks of plastic foam.

5. Carpet for training horses according to the preceding claim,
**characterised in**
**that** said number of blocks of plastic foam are connected to each other.

6. Carpet for training horses according to any of the preceding claims,
**characterised in**
**that** the lower part (2) comprises recesses (3), in which recesses parts (4) of hard material are arranged.

7. Carpet for training horses according to the preceding claim,
**characterised in**
**that** the lower part (2) comprises a number of such recesses (3), whereby parts (4) of hard material are arranged in respective recess (3) .

8. Carpet for training horses according to the preceding claim,
**characterised in**
**that** said parts (4) are designed of material with different hardness.

9. Carpet for training horses according to any of claims 6, 7 or 8,
**characterised in**
**that** said parts (4) comprises parties with various thicknesses.

10. Carpet for training horses according to any of claims 6, 7 or 8,
**characterised in**
**that** said recesses (3) are arranged substantially perpendicular to the direction in which a horse is walking on the carpet.
